# EUROPEAN PATENT SPECIFICATION

(11) **EP 2 837 996 B1**
(45) Date of publication and mention of the grant of the patent: **04.12.2019**
(21) Application number: 13808861.2
(22) Date of filing: 01.07.2013
(51) Int. Cl.: G06F 3/044, G06F 3/041, G02F 1/1333

(54) **PROJECTED CAPACITANCE TOUCH SCREEN AND MANUFACTURING METHOD THEREOF**
PROJITZIERT-KAPAZITIVER BERÜHRUNGSBILDSCHIRM UND HERSTELLUNGSVERFAHREN DAFÜR
ÉCRAN TACTILE À CAPACITANCE PROJETÉE ET SON PROCÉDÉ DE FABRICATION

(30) Priority: 29.06.2012 CN 201210222817
(43) Date of publication of application: 18.02.2015
(73) Proprietor: Huawei Device Co., Ltd., Dongguan, Guangdong 523808 (CN)
(72) Inventor: YIN, Hang, Shenzhen Guangdong 518129 (CN)
(74) Representative: Pfenning, Meinig & Partner mbB
(86) International application number: PCT/CN2013/078564
(87) International publication number: WO 2014/000711

(56) References cited:
- WO-A1-2013/012667
- CN-A- 102 262 469
- CN-A- 102 479 015
- CN-A- 102 778 987
- US-A1- 2009 086 113
- US-A1- 2010 164 881
- US-A1- 2010 231 549

## Description

### TECHNICAL FIELD

The present invention relates to an input device for human-computer interaction, and in particular, to a projected capacitive touchscreen and a manufacturing method thereof.

### BACKGROUND

Touchscreens in the prior art are classified into a resistive type, a capacitive type, an infrared type, and the like. Due to advantages such as a fast response, high reliability, and high durability, capacitive touchscreens are widely applied to electronic products. Among the capacitive touchscreens, a projected capacitive touchscreen becomes a mainstream development trend of current display touch technologies because the projected capacitive touchscreen can implement multipoint and accurate coordinate sensing and has a simple structure.

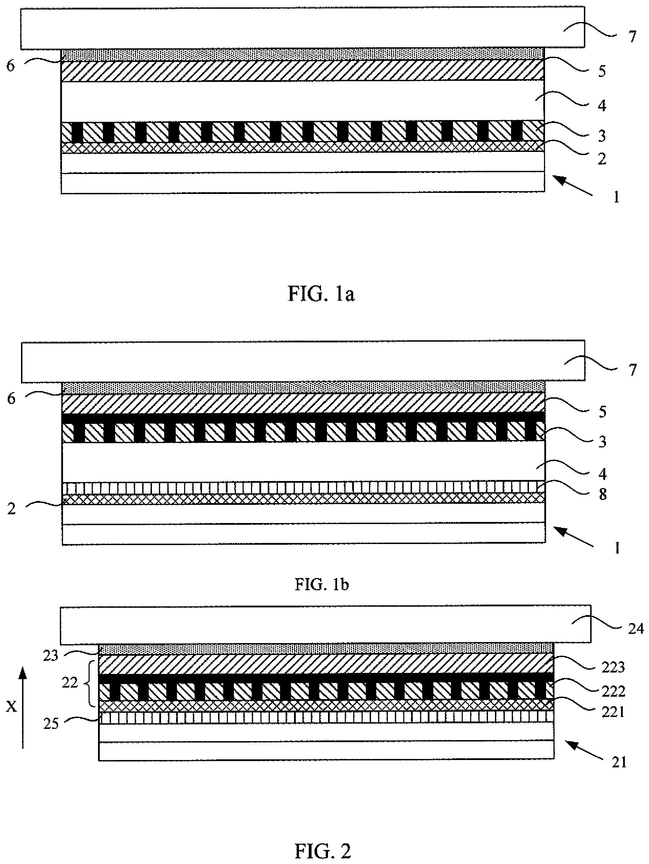

FIG. 1a shows a structure of a projected capacitive touchscreen in the prior art, where the projected capacitive touchscreen includes the following from bottom to top: a liquid crystal display (Liquid Crystal Display, LCD for short) 1, an upper polarizer (upper polarizer) 2, first direction sensing electrodes 3, a substrate 4, second direction sensing electrodes 5, a bonding layer 6, and a cover lens (Cover Lens) 7. The first direction sensing electrodes 3 and the second direction sensing electrodes 5 are ITO (Indium tin oxide, indium tin oxide) conductive circuits that are formed on top and bottom surfaces of the substrate 4 and are along a specified direction. Furthermore, the first direction sensing electrodes 3 and the second direction sensing electrodes 5 are electrically disconnected. The first direction sensing electrodes 3, the substrate 4, and the second direction sensing electrodes 5 that are sequentially overlaid form a sensing assembly. The bonding layer 6 is configured to bond the cover lens 7 to the second direction sensing electrodes 5. The liquid crystal display device is formed of two pieces of glass with liquid crystal between them. Black blocks between the first direction sensing electrodes 3 are insulation structures.

FIG. 1b shows another structure of a projected capacitive touchscreen in the prior art, where functional layers that are the same as those in FIG. 1a are marked the same. Differences from the structure shown in FIG. 1a are as follows: The first direction sensing electrodes 3 and the second direction sensing electrodes 5 are sequentially overlaid on the top surface of the substrate 4; black blocks between the first direction sensing electrodes 3 and between the first direction sensing electrodes 3 and the second direction sensing electrodes 5 are insulation structures (relative to thickness of other functional layers, thickness of the insulation structures between the first direction sensing electrodes 3 and the second direction sensing electrodes 5 may be ignored); and an electromagnetic shield layer 8 is formed on the bottom surface of the substrate that is opposite to the top surface.

When a user touches the cover lens 7 with a finger, capacitance between the first direction sensing electrodes 3 and the second direction sensing electrodes 5 in the touch position changes, and an electrostatic current that flows from the human body to the ground also changes accordingly. By measuring, through a circuit, a change in a current strength, it can be determined that the touch exists, and coordinates of the touch position can be calculated.

Because the substrate, whose thickness is much larger than thickness of other functional layers, is used to form the projected capacitive touchscreen, overall thickness of the projected capacitive touchscreen is large, which reduces an optical penetration rate thereof and further affects a display effect of the LCD. To solve the problem, a solution of manufacturing the first direction sensing electrodes and the second direction sensing electrodes on the bottom surface of the cover lens is proposed in the prior art, so that the substrate 4 in the structures shown in FIG. 1a and FIG. 1b is not required, thereby reducing the thickness of the projected capacitive touchscreen.

However, in the prior art, when the cover lens is manufactured, it needs to be cut and then reinforced (to increase hardness of the cover lens). Therefore, if the ITO conductive circuits are formed on the surface of the cover lens before the cover lens is cut, the cover lens cannot be reinforced; if the ITO conductive circuits are formed on the surface of each cover lens after the cover lens is cut and reinforced, manufacturing costs are largely increased; and if a large lens is reinforced before the ITO conductive circuits are formed on the surface and is then cut into small lens, processing difficulty is increased due to high hardness of the large lens, and therefore mechanical strength of the finally formed cover lens with the ITO conductive circuits deteriorates.

US 2009/0086113 A1 discusses a touch liquid crystal display wherein first and second electrodes are allocated on the upper and lower surface of an electrode pattern layer, respectively, wherein the electrode pattern layer is allocated between a protective layer and a conductive layer on an upper surface of an upper polarizer. US 2009/0231549 A1 discusses a liquid crystal display with a capacitive touch device, wherein a first electrode layer is formed immediately on an upper surface of a polarizing plate of a liquid crystal panel, and a second electrode layer is formed on the bottom surface of a polarizing plate of a liquid crystal panel. WO 2013/012667 A1, representing prior art pursuant to Article 54(3) EPC, discusses a touch sensor formed from electrodes located on a thin-film encapsulation layer on one or more sides of a polarizer.

### SUMMARY

Embodiments of the present invention provide a projected capacitive touchscreen and a manufacturing method thereof, which solve a problem that in the prior art, manufacturing costs and mechanical strength of a cover lens cannot be taken into consideration at the same time after thickness of a projected capacitive touchscreen is reduced.

To achieve the foregoing purpose, the embodiments of the present invention adopt the following technical solutions:

A projected capacitive touchscreen includes the following from bottom to top: a liquid crystal display device, a sensing assembly, a bonding layer, and a cover lens, where the sensing assembly is formed in the direction from bottom to top of an upper polarizer, first direction sensing electrodes, and second direction sensing electrodes that are sequentially overlaid the projected capacitive touchscreen further comprising an electromagnetic shield layer disposed between the upper polarizer and the liquid crystal display device.

A method for manufacturing a projected capacitive touchscreen includes: manufacturing a sensing assembly, where the sensing assembly is formed in the direction from bottom to top of an upper polarizer, first direction sensing electrodes, and second direction sensing electrodes that are sequentially overlaid; mounting a liquid crystal display device to the sensing assembly with a second surface of the upper polarizer that is opposite to the first surface facing the liquid crystal display device; and mounting a cover lens to the sensing assembly through a bonding layer with the first surface of the upper polarizer facing the bonding layer, wherein the method for manufacturing the sensing assembly specifically comprises: plating a first conductive film on the first surface of the upper polarizer, and etching the first conductive film to form the first direction sensing electrodes; plating a first insulation layer on the first surface of the upper polarizer on which the first direction sensing electrodes are formed, and etching the first insulation layer to form a first insulation structure covering the first direction sensing electrodes; plating a second conductive film on the first surface of the upper polarizer on which the first insulation structure is formed, and etching the second conductive film to form the second direction sensing electrodes; and plating a second insulation layer on the first surface of the upper polarizer on which the second direction sensing electrodes are formed wherein before the step of mounting the liquid crystal display device to the sensing assembly, the method further comprises:
plating a third conductive film on the second surface of the upper polarizer to form an electromagnetic shield layer.

According to the projected capacitive touchscreen and the manufacturing method thereof provided in the embodiments of the present invention, the sensing electrodes and the upper polarizer are overlaid to form the sensing assembly, so that the substrate used in the sensing assembly in the prior art is not required, and that the sensing electrodes do not need to be formed on the cover lens. Therefore, the thickness of the touchscreen is reduced without increasing the manufacturing costs because the cover lens can be manufactured according to an existing process. Further, high mechanical strength of the cover lens is ensured, thereby achieving the purpose of taking both the manufacturing costs and the mechanical strength of the cover lens into consideration after the thickness of the projected capacitive touchscreen is reduced.

### BRIEF DESCRIPTION OF DRAWINGS

To describe the technical solutions in the embodiments of the present invention or in the prior art more clearly, the following briefly introduces accompanying drawings required for describing the embodiments or the prior art. The accompanying drawings in the following description show merely some embodiments and examples of the present invention, and a person of ordinary skill in the art may still derive other drawings according to these accompanying drawings without creative efforts.
FIG. la is a schematic structural diagram of a projected capacitive touchscreen in the prior art;
FIG. 1b is another schematic structural diagram of a projected capacitive touchscreen in the prior art;
FIG. 2 is a schematic structural diagram of a projected capacitive touchscreen according to an embodiment of the present invention;
FIG. 3 is another schematic structural diagram of a projected capacitive touchscreen according to an example of the present invention;
FIG. 4 is a flowchart of a method for manufacturing a projected capacitive touchscreen according to an embodiment of the present invention;
FIG. 5 is a flowchart of a method for manufacturing a sensing assembly according to an embodiment of the present invention; and
FIG. 6 is a flowchart of another method for manufacturing a sensing assembly according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

An embodiment of the present invention provides a projected capacitive touchscreen. As shown in FIG. 2, the projected capacitive touchscreen includes the following from bottom to top (in an X direction): a liquid crystal display device 21, a sensing assembly 22, a bonding layer 23, and a cover lens 24, where the sensing assembly 22 is formed of an upper polarizer 221, first direction sensing electrodes 222, and second direction sensing electrodes 223 that are overlaid, and at least one of the first direction sensing electrodes 222 and the second direction sensing electrodes 223 is disposed between the upper polarizer 221 and the bonding layer 23.

The foregoing "overlaid" means that: according to a specified direction, a second layer is disposed on a first layer, a third layer is disposed on the second layer, and so on. However, it does not necessarily mean that overlaying is performed according to a sequence of the upper polarizer 221, the first direction sensing electrodes 222, and the second direction sensing electrodes 223 shown in FIG. 2. Instead, the overlaying may be performed in any sequence of the three layers. For example, the first direction sensing electrodes 222, the upper polarizer 221, and the second direction sensing electrodes 223 are sequentially overlaid from bottom to top. In FIG. 2, black blocks between the first direction sensing electrodes 222 and between the first direction sensing electrodes 222 and the second direction sensing electrodes 223 are insulation structures (relative to thickness of other layers, thickness of the insulation structure between the first direction sensing electrodes 222 and the second direction sensing electrodes 223 may be ignored).

Because it is specified that at least one of the first direction sensing electrodes and the second direction sensing electrodes is disposed between the upper polarizer and the bonding layer, sensing assemblies of two structures can be defined.

FIG. 2 shows a projected capacitive touchscreen of a first structure, where in the X direction from bottom to top, the sensing assembly 22 is formed of the upper polarizer 221, the first direction sensing electrodes 222, and the second direction sensing electrodes 223 that are sequentially overlaid.

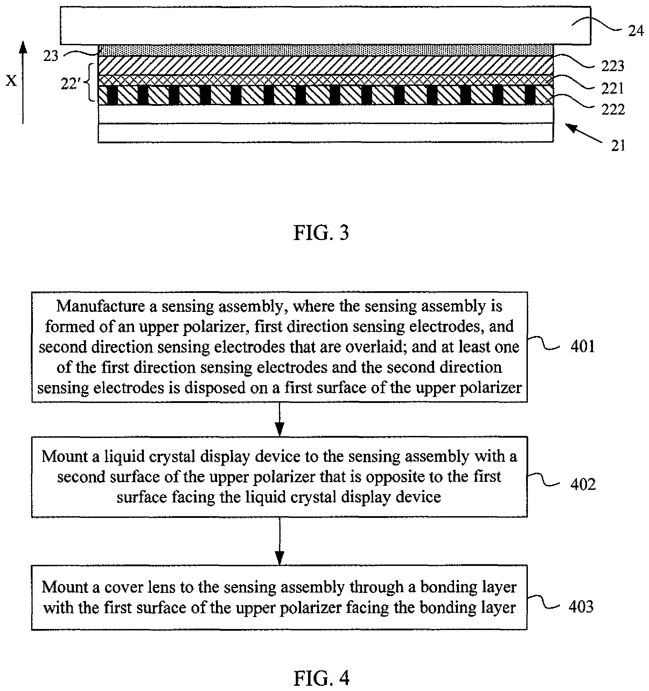

FIG. 3 shows a projected capacitive touchscreen of a second structure, where in the X direction from bottom to top, a sensing assembly 22' is formed of the first direction sensing electrodes 222, the upper polarizer 221, and the second direction sensing electrodes 223 that are sequentially overlaid, and black blocks between the first direction sensing electrodes 222 are insulation structures.

It should be noted that the structures in FIG. 3 that are the same as those in FIG. 2 are marked the same.

For the projected capacitive touchscreen of the first structure, an electromagnetic shield layer 25 may also be disposed between the upper polarizer 221 and the liquid crystal display device 21. In the structure shown in FIG. 2, both the first direction sensing electrodes 222 and the second direction sensing electrodes 223 are formed on a same side of the upper polarizer 221, the sensing electrodes are conductors, and the upper polarizer 221 is an insulator. Therefore, electromagnetic noise from a side of the liquid crystal display device 21 may cause an adverse impact on the sensing assembly 22. The electromagnetic shield layer 25 that is disposed on another side of the upper polarizer 221 without sensing electrodes can prevent the adverse impact of the electromagnetic noise on the sensing assembly 22.

In the projected capacitive touchscreen of the second structure, the first direction sensing electrodes may be distributed in a large area under the upper polarizer, that is, a circuit width may be large, but an interval may be small, so that the first direction sensing electrodes can be seen as an electromagnetic shield layer. In addition, generally, the first direction sensing electrodes bear a drive signal, the second direction sensing electrodes bear a receive signal, and the drive signal is not subject to interference. Therefore, the first direction sensing electrodes can be shared as an electromagnetic shield layer.

In the projected capacitive touchscreen provided in this embodiment of the present invention, the sensing electrodes and the upper polarizer are overlaid to form the sensing assembly, so that the substrate used in the sensing assembly in the prior art is not required, and that the sensing electrodes do not need to be formed on the cover lens. Therefore, the thickness of the touchscreen is reduced without increasing the manufacturing costs because the cover lens can be manufactured according to an existing process. Further, high mechanical strength of the cover lens is ensured, thereby achieving the purpose of taking both the manufacturing costs and the mechanical strength of the cover lens into consideration after the thickness of the projected capacitive touchscreen is reduced.

An embodiment of the present invention further provides a method for manufacturing a projected capacitive touchscreen. As shown in FIG. 4, the method includes the following steps:
401. Manufacture a sensing assembly, where the sensing assembly is formed of an upper polarizer, first direction sensing electrodes, and second direction sensing electrodes that are overlaid; and at least one of the first direction sensing electrodes and the second direction sensing electrodes is disposed on a first surface of the upper polarizer.
402. Mount a liquid crystal display device to the sensing assembly with a second surface of the upper polarizer facing the liquid crystal display device, where the second surface is opposite to the first surface.
403. Mount a cover lens to the sensing assembly through a bonding layer with the first surface of the upper polarizer facing the bonding layer.

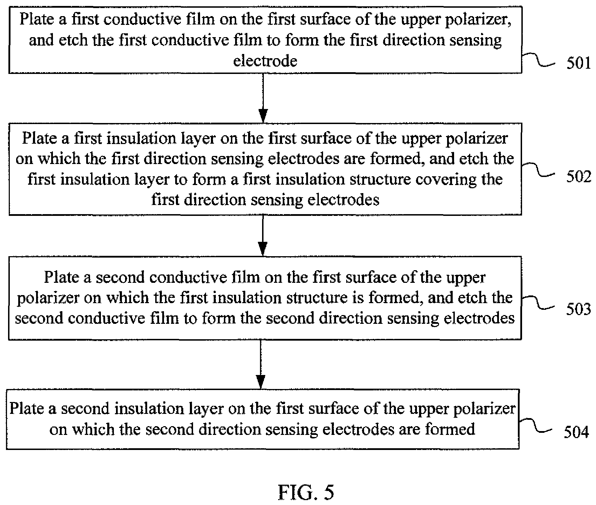

In the foregoing method, two specific methods for manufacturing the sensing assembly may exist. A first method, as shown in FIG. 5, includes the following steps:
501. Plate a first conductive film on the first surface of the upper polarizer, and etch the first conductive film to form the first direction sensing electrodes.
502. Plate a first insulation layer on the first surface of the upper polarizer on which the first direction sensing electrodes are formed, and etch the first insulation layer to form a first insulation structure covering the first direction sensing electrodes.
503. Plate a second conductive film on the first surface of the upper polarizer on which the first insulation structure is formed, and etch the second conductive film to form the second direction sensing electrodes.
504. Plate a second insulation layer on the first surface of the upper polarizer on which the second direction sensing electrodes are formed.

The first insulation layer is used to ensure electrical disconnection between the second direction sensing electrodes and the first direction sensing electrodes and between the first direction sensing electrodes; and the second insulation layer is used to ensure electrical disconnection between the second direction sensing electrodes.

In the sensing assembly obtained by using the method for manufacturing the sensing assembly, the sensing electrodes are formed on a same side of the upper polarizer, the sensing electrodes are conductors, and the upper polarizer is an insulator. To prevent electromagnetic noise that comes from a side of the liquid crystal display device from causing an adverse impact on the sensing assembly, in the method for manufacturing a projected capacitive touchscreen, before the step of mounting the liquid crystal display device to the sensing assembly, the method may further include: plating a third conductive film on the second surface of the upper polarizer to form an electromagnetic shield layer. By using the methods shown in FIG. 4 and FIG. 5 and the method for forming the electromagnetic shield layer, the projected capacitive touchscreen shown in FIG. 2 can be obtained. In step 402, the liquid crystal display device can be mounted to the sensing assembly by using bonding glue on the second surface of the upper polarizer.

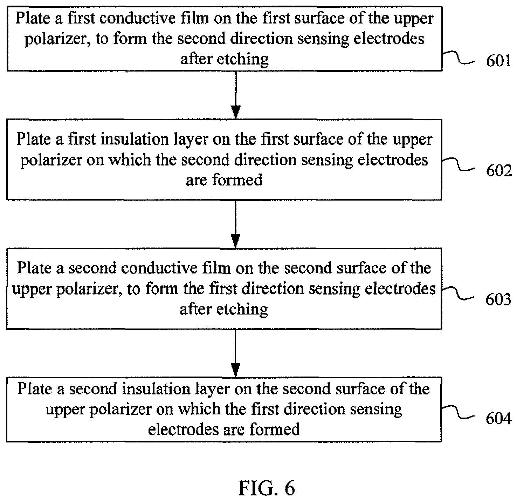

A second method, as shown in FIG. 6, includes the following steps:
601. Plate a first conductive film on the first surface of the upper polarizer to form the second direction sensing electrodes after etching.
602. Plate a first insulation layer on the first surface of the upper polarizer on which the second direction sensing electrodes are formed.
   The first insulation layer is used to ensure electrical disconnection between the second direction sensing electrodes.
603. Plate a second conductive film on the second surface of the upper polarizer to form the first direction sensing electrodes after etching.
604. Plate a second insulation layer on the second surface of the upper polarizer on which the first direction sensing electrodes are formed.

The second insulation layer is used to ensure electrical disconnection between the first direction sensing electrodes.

By using the methods shown in FIG. 4 and FIG. 6, the projected capacitive touchscreen shown in FIG. 3 can be obtained.

In the projected capacitive touchscreen obtained by using the method for manufacturing a projected capacitive touchscreen according to the embodiments of the present invention, the sensing electrodes and the polarizer are overlaid to form the sensing assembly, so that the substrate used in the sensing assembly in the prior art is not required, and that the sensing electrodes do not need to be formed on the cover lens. Therefore, the thickness of the touchscreen is reduced without increasing the manufacturing costs because the cover lens can be manufactured according to an existing process. Further, high mechanical strength of the cover lens is ensured, thereby achieving the purpose of taking both the manufacturing costs and the mechanical strength of the cover lens into consideration after the thickness of the projected capacitive touchscreen is reduced.

It should be noted that in the foregoing embodiments, the conductive film may be an indium tin oxide film; and an extension direction of the first direction sensing electrodes is different from an extension direction of the second direction sensing electrodes, and generally, an angle between a first direction and a second direction is 90 degrees, and the angle may also be designed to another degree according to a performance requirement. In the foregoing embodiments, the first direction sensing electrodes are disposed under the second direction sensing electrodes. Certainly, the present invention is not limited thereto, and the second direction sensing electrodes may also be disposed under the first direction sensing electrodes, so that the sensing assembly is formed of the upper polarizer, the second direction sensing electrodes, and the first direction sensing electrodes that are sequentially overlaid from bottom to top, or that the sensing assembly is formed of the second direction sensing electrodes, the upper polarizer, and the first direction sensing electrodes that are sequentially overlaid from bottom to top.

The embodiments of the present invention are mainly applied to a device that requires both a display and a touchscreen, for example, a mobile phone, a phone display, a tablet computer, a computer display, a television, or a household appliance.

The foregoing descriptions are merely specific embodiments of the present invention, but are not intended to limit the protection scope of the present invention. The scope of protection is defined by the appended claims.

## Claims

1. A projected capacitive touchscreen, comprising the following from bottom to top: a liquid crystal display device (21), a sensing assembly (22), a bonding layer (23), and a cover lens (24, **characterized in that**
the sensing assembly (22) is formed in the direction from bottom to top of an upper polarizer (221), first direction sensing electrodes (222), and second direction sensing electrodes (223) that are sequentially overlaid; the projected capacitive touchscreen further comprising an electromagnetic shield layer (25) disposed between the upper polarizer (221) and the liquid crystal display device (21).

2. A method for manufacturing a projected capacitive touchscreen, comprising:
manufacturing (401) a sensing assembly (22), wherein the sensing assembly (22) is formed in the direction from bottom to top of an upper polarizer (221), first direction sensing electrodes (222), and second direction sensing electrodes (223) that are sequentially overlaid on a first surface of the upper polariser (221);
mounting (402) a liquid crystal display device (21) to the sensing assembly (22) with a second surface of the upper polarizer (221) facing the liquid crystal display device (21), where the second surface is opposite to the first surface; and
mounting (403) a cover lens (24) to the sensing assembly (22) through a bonding layer (23), with the first surface of the upper polarizer (221) facing the bonding layer (23);
**characterized in that** the method for manufacturing (401) the sensing assembly (22) specifically comprises:
plating (501) a first conductive film on the first surface of the upper polarizer (221), and etching the first conductive film to form the first direction sensing electrodes (222);
plating (502) a first insulation layer on the first surface of the upper polarizer (221) on which the first direction sensing electrodes (222) are formed, and etching the first insulation layer to form a first insulation structure covering the first direction sensing electrodes (222);
plating (503) a second conductive film on the first surface of the upper polarizer (221) on which the first insulation structure is formed, and etching the second conductive film to form the second direction sensing electrodes (223); and
plating (504) a second insulation layer on the first surface of the upper polarizer (221) on which the second direction sensing electrodes (223) are formed;
wherein before the step of mounting (402) the liquid crystal display device (21) to the sensing assembly (22), the method further comprises:
plating a third conductive film on the second surface of the upper polarizer (221) to form an electromagnetic shield layer (25).

## Patentansprüche

1. Projiziert-kapazitiver Berührungsbildschirm, umfassend Folgendes von unten nach oben: eine Flüssigkristallanzeigeeinrichtung (21), eine Abtastbaugruppe (22), eine Bindungsschicht (23) und eine Abdeckscheibe (24), **dadurch gekennzeichnet, dass** die Abtastbaugruppe (22) auf einem oberen Polarisator (221) in der Richtung von unten nach oben ausgebildet ist; erste Richtungsabtastelektroden (222) und zweite Richtungsabtastelektroden (223) sequenziell überlagert sind; der projiziert-kapazitive Berührungsbildschirm ferner eine elektromagnetische Abschirmschicht (25) umfasst, angeordnet zwischen dem oberen Polarisator (221) und der Flüssigkristallanzeigeeinrichtung (21).

2. Verfahren zur Herstellung eines projiziert-kapazitiven Berührungsbildschirms, umfassend:
Herstellen (401) einer Abtastbaugruppe (22), wobei die Abtastbaugruppe (22) auf einem oberen Polarisator (221) in der Richtung von unten nach oben ausgebildet ist; erste Richtungsabtastelektroden (222) und zweite Richtungsabtastelektroden (223), die auf einer ersten Oberfläche des oberen Polarisators (221) sequenziell überlagert sind;
Anbringen (402) einer Flüssigkristallanzeigeeinrichtung (21) an der Abtastbaugruppe (22), wobei eine zweite Oberfläche des oberen Polarisators (221) der Flüssigkristallanzeigeeinrichtung (21) gegenüberliegt, wobei die zweite Oberfläche der ersten Oberfläche gegenüberliegt; und
Anbringen (403) einer Abdeckscheibe (24) an der Abtastbaugruppe (22) durch eine Bindungsschicht (23), wobei die erste Oberfläche des oberen Polarisators (221) der Bindungsschicht (23) gegenüberliegt;
**dadurch gekennzeichnet, dass** das Verfahren zur Herstellung (401) der Abtastbaugruppe (22) im Einzelnen umfasst:
Plattieren (501) eines ersten leitfähigen Films auf der ersten Oberfläche des oberen Polarisators (221) und Ätzen des ersten leitfähigen Films, um die ersten Richtungsabtastelektroden (222) zu bilden;
Plattieren (502) einer ersten Isolierschicht auf der ersten Oberfläche des oberen Polarisators (221), auf der die ersten Richtungsabtastelektroden (222) ausgebildet sind, und Ätzen der ersten Isolierschicht, um eine erste Isolierschicht zu bilden, die die ersten Richtungsabtastelektroden (222) bedeckt;
Plattieren (503) eines zweiten leitfähigen Films auf der ersten Oberfläche des oberen Polarisators (221), auf der die erste Isolierstruktur ausgebildet ist, und Ätzen des zweiten leitfähigen Films, um die zweiten Richtungsabtastelektroden (223) zu bilden; und
Plattieren (504) einer zweiten Isolierschicht auf der ersten Oberfläche des oberen Polarisators (221), auf der die zweiten Richtungsabtastelektroden (223) ausgebildet sind;
wobei das Verfahren vor dem Schritt des Anbringens (402) der Flüssigkristallanzeigeeinrichtung (21) an der Abtastbaugruppe (22) ferner umfasst:
Plattieren eines dritten leitfähigen Films auf der zweiten Oberfläche des oberen Polarisators (221), um eine elektromagnetische Abschirmschicht (25) zu bilden.

## Revendications

1. Écran tactile capacitif projeté, comprenant les éléments suivants de bas en haut : un dispositif d'affichage à cristaux liquides (21), un ensemble de détection (22), une couche de liaison (23) et une lentille de protection (24), **caractérisé en ce que** l'ensemble de détection (22) est formé dans la direction allant de bas en haut d'un polariseur supérieur (221), de premières électrodes de détection de direction (222) et de secondes électrodes de détection de direction (223) qui sont superposées de manière séquentielle ; l'écran tactile capacitif projeté comprenant en outre une couche de protection électromagnétique (25) disposée entre le polariseur supérieur (221) et le dispositif d'affichage à cristaux liquides (21).

2. Procédé pour fabriquer un écran tactile capacitif projeté consistant :
à fabriquer (401) un ensemble de détection (22), dans lequel l'ensemble de détection (22) est formé dans la direction allant de bas en haut d'un polariseur supérieur (221), de premières électrodes de détection de direction (222) et de secondes électrodes de détection de direction (223) qui sont superposées de manière séquentielle sur une première surface du polariseur supérieur (221) ;
à monter (402) un dispositif d'affichage à cristaux liquides (21) sur l'ensemble de détection (22), une seconde surface du polariseur supérieur (221) étant orientée vers le dispositif d'affichage à cristaux liquide (21), où la seconde surface est opposée à la première surface ; et
à monter (403) une lentille de protection (24) sur l'ensemble de détection (22) au moyen d'une couche de liaison (23), la première surface du polariseur supérieur (221) étant orientée vers la couche de liaison (23) ;
**caractérisé en ce que** le procédé pour fabriquer (401) l'ensemble de détection (22) consiste spécifiquement :
à plaquer (501) un premier film conducteur sur la première surface du polariseur supérieur (221) et à graver à l'eau-forte le premier film conducteur pour former les premières électrodes de détection de direction (222) ;
à plaquer (502) une première couche d'isolation sur la première surface du polariseur supérieur (221) sur laquelle les premières électrodes de détection de direction (222) sont formées, et à graver à l'eau-forte la première couche d'isolation pour former une première structure d'isolation recouvrant les premières électrodes de détection de direction (222) ;
à plaquer (503) un deuxième film conducteur sur la première surface du polariseur supérieur (221) sur laquelle la première structure d'isolation est formée, et à graver à l'eau-forte le deuxième film conducteur pour former les secondes électrodes de détection de direction (223) ; et
à plaquer (504) une seconde couche d'isolation sur la première surface du polariseur supérieur (221) sur laquelle les secondes électrodes de détection de direction (223) sont formées ;
dans lequel, avant l'étape de montage (402) du dispositif d'affichage à cristaux liquides (21) sur l'ensemble de détection (22), le procédé consiste en outre :
à plaquer un troisième film conducteur sur la seconde surface du polariseur supérieur (221) pour former une couche de protection électromagnétique (25).
